**Europäisches Patentamt**

**European Patent Office**

**Office européen des brevets**

(19)

(11) Veröffentlichungsnummer : **0 052 326 B1**

(12) **EUROPÄISCHE PATENTSCHRIFT**

(45) Veröffentlichungstag der Patentschrift :
15.08.84

(51) Int. Cl.³ : **G 03 B 41/18**

(21) Anmeldenummer : **81109585.0**

(22) Anmeldetag : **10.11.81**

(54) **Verstärkungsfolie in einer Röntgen-Filmkassette.**

(30) Priorität : **14.11.80 DE 3043070**

(43) Veröffentlichungstag der Anmeldung :
**26.05.82 Patentblatt 82/21**

(45) Bekanntmachung des Hinweises auf die Patenterteilung : **15.08.84 Patentblatt 84/33**

(84) Benannte Vertragsstaaten :
**BE FR GB IT NL**

(56) Entgegenhaltungen :
**DE-A- 2 802 730
DE-A- 2 835 780
DE-A- 2 917 547
DE-B- 2 642 478
US-A- 4 059 768**

(73) Patentinhaber : **AGFA-GEVAERT Aktiengesellschaft
D-5090 Leverkusen 1 (DE)**

(72) Erfinder : **Van Landeghem, Willy Karel
Laarstraat 2
B-2789 St. Gillis Waas (BE)**
Erfinder : **De Maayer, Petrus Jozef
Ekstorlaan 6
B-2228 Ranst (BE)**
Erfinder : **Loots, Francois Pierre
Anna Van Hoorn Str. 6
B-2510 Mortsel (BE)**
Erfinder : **Pattyn, Hendrik Adolf
Monnikenplein 14
B-2610 Wilrijk (BE)**
Erfinder : **Bauer, Walter
Heinrich-Wieland-Strasse 178
D-8000 München 83 (DE)**
Erfinder : **Färber, Heinrich
Dietlindenstrasse 9
D-8000 München 40 (DE)**
Erfinder : **Müller, Jürgen
Bozzaristrasse 7
D-8000 München 90 (DE)**
Erfinder : **Schmidt, Manfred
Neusatzerstrasse 2
D-8000 München 82 (DE)**

Jouve, 18, rue St-Denis, 75001 Paris, France

## Beschreibung

Der Erfindung betrifft eine Verstärkungsfolie mit einer dem Film zugewandten Oberfläche in einer Röntgenfilmkassette mit einem Bodenteil, einem Deckelteil, Verbindungselementen zum Verschließen der beiden Kassettenteile, einer zur Filmgröße etwa gleich großen Magnetplatte, einer auf die Magnetkraft der Magnetplatte ansprechenden Gegenplatte, wobei Film und Verstärkungsfolie zwischen Magnetplatte und Gegenplatte gehalten sind und Magnetplatte und/oder Gegenplatte elastisch an ihrem Kassettenteil angebracht sind.

Eine Röntgen-Filmkassette der eingangs genannten Art ist beispielsweise aus der DE-A-28 02 730-7 bekannt. Bei diesen Kassetten hat es sich nun gezeigt, daß nach dem Einlegen eines neuen Filmes und dem Verschließen der Kassette insbesondere bei großformatigen Kassetten ab und zu ein Lufteinschluß zwischen Film und Verstärkungsfolie erfolgen kann. Dieser Lufteinschluß wird zwar durch die zwischen Magnetplatte und Gegenplatte wirkende Anziehungskraft mit der Zeit an den Rand verschoben, so daß sich dieser auflösen kann. Dies kann jedoch mehr Zeit beanspruchen, als Zeit zwischen dem Beladen und dem Gebrauch der Kassette vergeht. Dies bedeutet, daß die Röntgenaufnahme unter Umständen mit einem Lufteinschluß durchgeführt wird, was je nach Dicke des Lufteinschlusses zu einem unscharfen Bereich in der Aufnahme führen kann.

Durch die DE-A-2 835 780 ist eine Röntgenverstärkungsfolie mit rauher Oberfläche bekannt, durch die außer verbesserter Lösbarkeit der Flächen von Film und Folie eine vereinfachte und reproduzierbare Herstellbarkeit erreicht werden soll. Der Einsatz dieser Folien ist nicht in Röntgenfilm-Kassetten, sondern vielmehr in sog. Blattfilmwechslern vorgesehen, in welchen ein Film in die Aufnahmestation eingebracht, dort gegen die Verstärkungsfolie gedrückt und nach der Aufnahme wieder aus dieser Station herausgebracht werden soll. Bei diesem Vorgang tritt die Gefahr auf, daß der Film neben der elektrischen Aufladung auch noch eine hohe Oberflächenadhäsion aufweist, so daß er nur schwer von der Folie wieder gelöst werden kann. Es wird daher bei der bekannten Röntgenverstärkungsfolie vorgeschlagen, glatte transparente Kügelchen hoher Abriebfestigkeit in einer bestimmten Größe und Menge in die Folie einzubringen, wodurch die Haftung an den Röntgenfilmen verringert werden soll.

Die bekannte Verstärkungsfolie, welche in einem Filmwechsler mit Zufriedenheit verwendet werden kann, ist für den Einsatz in einer Röntgenfilm-Kassette jedoch ungeeignet. Beim Filmwechsler sind die Verstärkungsfolien an den beiden Wänden vertikal angeordnet, die nach dem Einbringen des Films aufeinander zu bewegt werden und den Film sandwichartig halten. Nach der Belichtung des Films fahren diese beiden Wände wieder auseinander und geben den Film frei. Dieser soll so schnell wie möglich von den Verstärkungsfolien abfallen und von diesen durch sein Gewicht abgleiten. Aus diesem Grund soll bei dem Filmwechsler die Adhäsion des Films an den Verstärkungsfolien so gering wie möglich gehalten werden.

Bei einem Filmwechsler ist jedoch nie vorgesehen, daß die die Verstärkungsfolien tragenden Wände im nicht gebrauchsfertigen Zustand oder zu einer anderen Zeit aneinander anliegen, ohne daß sich ein Film zwischen diesen befindet. Röntgenfilm-Kassetten werden dagegen die längste Zeit in einem unbeladenen Zustand und geschlossen aufbewahrt. In diesem Zustand werden durch das Andrucksystem die Verstärkungsfolien aneinandergedrückt. Nachdem die Leuchtschicht, in welcher die bekannten Kügelchen eingelagert sind, sehr weich ist, besteht bei der vorgeschlagenen Anzahl von Kügelchen pro $cm^2$ gemäß der bekannten Vorrichtung eine verhältnismäßig hohe Flächenpressung, so daß die Kügelchen sich in die gegenüberliegende Verstärkungsfolie eindrücken und die Oberfläche der Leuchtschicht verletzen.

Ein weiterer Nachteil der bekannten Folie ist darin zu sehen, daß die Kügelchen, die in das weiche Leuchtschichtmaterial eingelassen sind, aufgrund ihres verhältnismäßig weiten Abstandes sich verhältnismäßig leicht durch mechanische Beanspruchung aus dem Material herausschälen lassen. Beim Filmwechsler wird der Film nahezu berührungslos zwischen die Verstärkungsfolien gebracht, welche dann senkrecht aufeinander zu fahren. Beim heute üblichen Beladesystem für Röntgenfilm-Kassetten wird dagegen der Film von einer Seite her eingeschoben, wobei die messerartige Vorderkante des Filmes über den Verstärkungsschirm gleitet. Damit ist aber eine mechanische Beanspruchung gegeben, welche die Kügelchen aus der Verstärkungsfolie lösen kann.

Aufgabe der Erfindung ist es demgegenüber, eine Verstärkungsfolie für eine gattungsgemäße Röntgenfilm-Kassette derart auszubilden, daß Lufteinschlüsse zwischen Verstärkungsfolie und Film beim Schließen der Kassette vermieden bzw. sehr rasch abgebaut werden können, wobei bei ungeladener Kassette oder beim Beladen derselben Beschädigungen der Verstärkerfolien zu vermeiden sind.

Diese Aufgabe wird durch die im Kennzeichen des Anspruchs 1 beschriebene Erfindung gelöst.

Mit der Erfindung wird demgegenüber erreicht, daß die beim Schließen der Kassette sich zwischen Verstärkungsfolien und Film befindende Luft sehr schnell ausströmen kann. Dies bringt zugleich den Vorteil, daß beim Öffnen der Kassette die Luft ebenso schnell zwischen Film und Verstärkungsfolie eindringen kann, womit das sog. Ankleben des Filmes an einer Verstärkungsfolie vermieden wird. Mit der Verwendung rauher Verstärkungsfolien gemäß Anspruch 1 wird somit einerseits die Bildqualität erhöht und andererseits die Möglichkeit geschaffen, die Kassetten in rascherer Folge zu verwenden.

Mit der Verwendung rauher Verstärkungsfolien kann auch die Haltbarkeit der Verstärkungsfolien erhöht und damit auch eine gleichmäßige Bildqualität auf längere Zeit erhalten werden, da der beim Einführen über die Verstärkungsfolie gleitende Film nur über die erhabenen Folienteile läuft. Weitere Einzelheiten und Vorteile der Erfindung ergeben sich aus den Unteransprüchen im Zusammenhang mit der Beschreibung von Ausführungsbeispielen, die anhand von Figuren eingehend erläutert sind. Es zeigen :

Figur 1 eine perspektivische Ansicht einer erfindungsgemäßen Röntgen-Filmkassette, zum Teil im Schnitt ;

Figur 2 eine perspektivische Ansicht einer geschnittenen, zum Teil geöffneten Kassette gemäß einer zweiten Ausführungsform der Erfindung ;

Figur 3 einen Querschnitt durch einen Teil der erfindungsgemäßen Verstärkungsfolie im Zusammenwirken mit einem Film ; und

Figur 4 einen Querschnitt durch die in Fig. 3 dargestellte Verstärkungsfolie bei einer Filmeingabe.

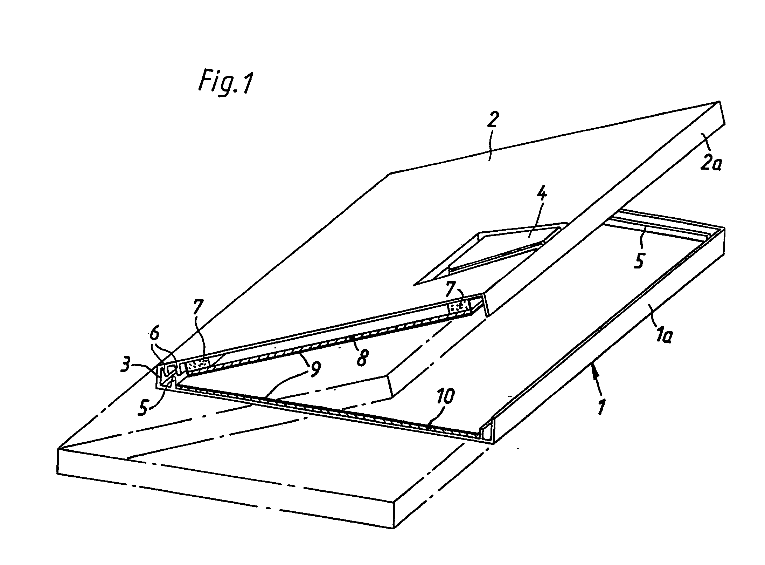

In Fig. 1 ist mit 1 ein Bodenteil und mit 2 ein Deckelteil einer Röntgen-Filmkassette bezeichnet, welche beiden Teile durch ein Kunststoffscharnier miteinander verbunden sind. Am Deckelteil befindet sich ein eingelassener Griff 4, der nicht dargestellte Verriegelungselemente betätigt.

Am Bodenteil 1 sind nach innen gerichtete Lippen 5 vorgesehen, welche an den Außenrändern verlaufen und ein in der Größe der Verstärkungsfolien angepaßtes Rechteck bilden. An der Scharnierseite des Deckelteiles 2 sind zwei parallel verlaufende Lippen 6 vorgesehen, welche im geschlossenen Zustand der Kassette beiderseits der Bodenteillippe 5 verlaufen. Im übrigen greifen Seitenstege 2a des Deckelteiles 2 in die durch Lippen 5 und Seitenstege 1a des Bodenteils gebildete Nuten ein und bilden so mit den Lippen 6 eine Lichtabdichtung.

Auf der Innenseite des Deckelteiles 2 ist eine Schaumstoffumrandung 7 angebracht, an welcher eine Magnetplatte 8 befestigt ist. Die Magnetplatte 8 hat etwa gleiche Abmessungen wie die Verstärkungsfolien 9, der nicht dargestellte Röntgenfilm und eine Gegenplatte 10. Die Gegenplatte 10 ist am Bodenteil 1 befestigt, beispielsweise durch Klebung, und besteht aus einem beliebigen von Magnetkraft anziehbaren Werkstoff. Diese Gegenplatte 10 kann beispielsweise eine sehr dünne Stahlfolie mit einer Dicke von 0,05, vorzugsweise 0,02 mm sein, ein Eisenhaftkarton, ein in Plastik gebundenes Ferritpulver oder dergl., wenn nur die Röntgenabsorption möglichst gering ist.

Die Magnetplatte 8, die stabil oder flexibel sein kann, besteht beispielsweise aus einer Alnico-Legierung, aus Oxyd-Dauermagneten (Fe-Co-Oxyde, Ba-, SR-Ferrite, aus magnetisch beschichteten PVC-Folien oder aus im Spritzverfahren hergestellten Magneten aus Oxyd-Pulver (keramische Werkstoffe wie Eisenoxyd und Bariumoxyd) und Bindemittel.

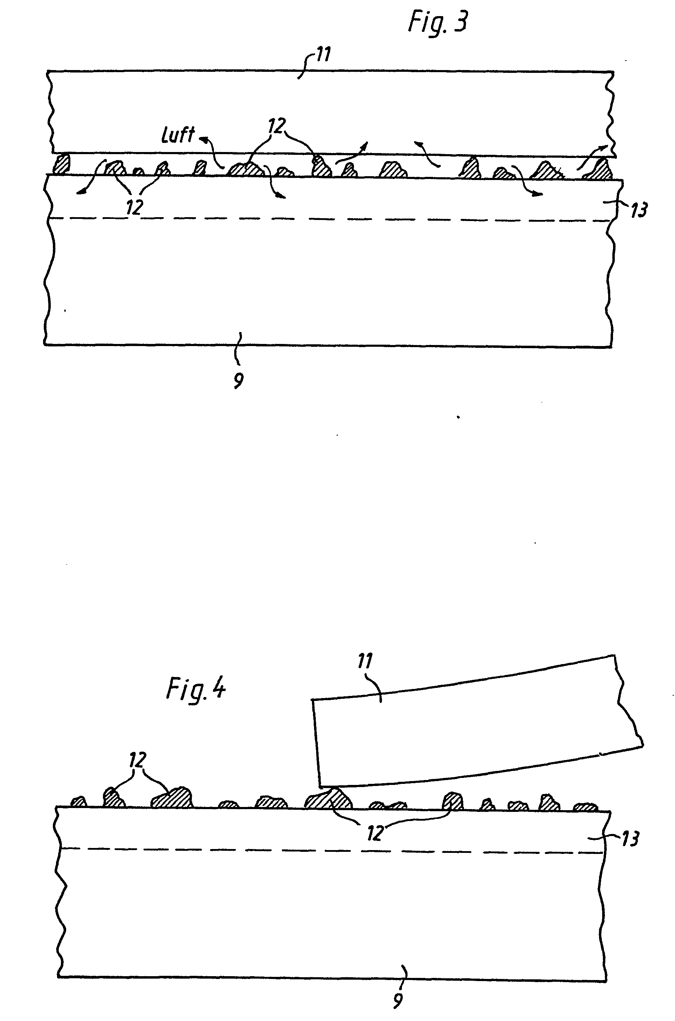

Der Aufbau der Verstärkungsfolien 9 ist aus den Fig. 3 und 4 ersichtlich. Daraus ist zu sehen, daß in der zum Film 11 weisenden Oberfläche der Verstärkungsfolie 9 Teilchen in Form von Körnchen oder Kügelchen 12 eingebettet sind. Die Größe dieser Teilchen liegt in der Größenordnung von 15 bis 60, vorzugsweise 25 bis 50 μm. Die eingebrachten Teilchen 12 sind lichtdurchlässig, wobei etwa 1 500, vorzugsweise 1 200 Teilchen pro Quadratzentimeter vorgesehen sind.

Statt der Teilchen kann eine entsprechende Oberfläche auch durch formgebende Maßnahmen, wie beispielsweise Prägen oder Rakeln vorgesehen werden.

Wenn ein Film 11 in die Kassette eingegeben wird, dann gleitet der vordere Rand an einer Verstärkungsfolie etwa gemäß Fig. 4 an der Verstärkungsfolie 9 entlang. Dieses Gleiten der Filmkante beim Einlaufen des Filmes 11 auf den erhabenen, in der Regel sehr abriebfesten Teilchen 12 hält den Film 11 von der lichtwirksamen Schicht 13 der Verstärkungsfolie 9 ab, wodurch die Lebensdauer der Verstärkungsfolie erhöhte wird. Im geschlossenen Zustand der Kassette und mit eingelegtem Film 11 hält der Film 11 zwar einen geringen Abstand zur lichtwirksamen Schicht 13 der Verstärkungsfolie 9 ein, andererseits ermöglichen die Hohlräume zwischen den Teilchen 12 und Film 11 und Verstärkungsfolie 9 das Ein- und Ausströmen der Luft. Mit dem Abstand zwischen Film und Folie wird zwar die Aufnahmeschärfe insgesamt um einen geringen Prozentsatz verschlechtert. Andererseits wird aber eine Aufnahme unter Lufteinschluß vermieden, bei welcher im Bereich eines sehr dicken Lufteinschlusses eine unscharfe Aufnahme entstehen könnte, so daß die Aufnahme wiederholt werden muß.

Die Verstärkungsfolien 9 sind zur leichteren Handhabung der Kassette zweckmäßigerweise leicht mit der Magnetplatte 8 bzw. der Gegenplatte 10 verbunden, womit das Einlegen eines Filmes erleichtert ist. Aufgrund des Magnetfeldes zwischen Magnetplatte und Gegenplatte wird ein gleichmäßiger Andruck auf der gesamten Filmfläche erreicht, was ein Hauptkriterium für gute Bildqualität darstellt. Beim Öffnen der Kassette wird die an der Gegenplatte 10 haftende Magnetplatte 8 mit dem Deckelteil und der oberen Verstärkungsfolie 9 abgehoben und der Film 11 kann durch das Einströmen der Luft zwischen die Teilchen 12 leicht von der anderen Verstärkungsfolie abgehoben werden oder durch Eigengewicht abfallen bzw. herabgleiten.

Statt einer Befestigung der Magnetplatte 8 an der Schaumstoffumrandung 7 kann die Magnetplatte 8 auch fest im Deckelteil 2 integriert oder durch eine dünne Hülle über Schaumstoffleisten an jenem festgehalten werden. Bei einer flexiblen Magnetplatte 8 wird die Gleichmäßigkeit des Andrucks noch optimiert.

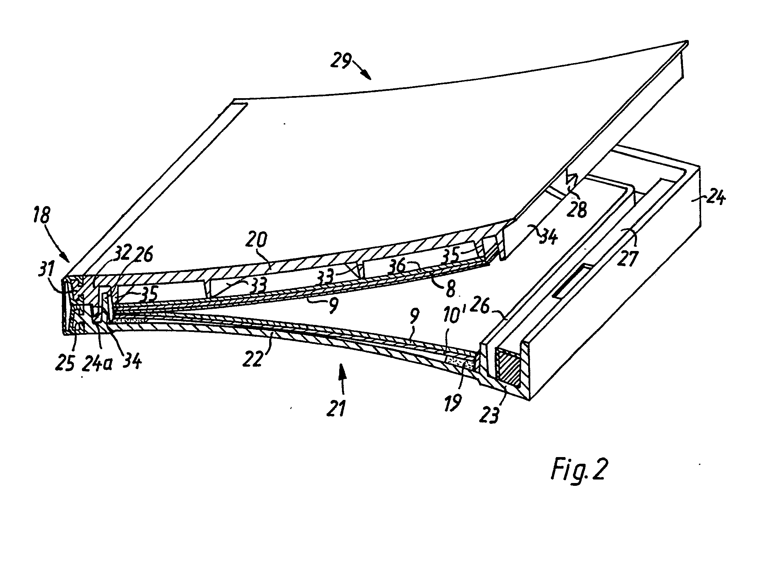

Eine andere Ausführungsform der Erfindung ist in Fig. 2 dargestellt, wobei gleiche Teile gleiche Bezugsziffern aufweisen. Darin ist mit 21 ein Kassettenboden bezeichnet, der eine flexible Kassettenwand 22, einen die Wand einsäumenden Rahmen 23 und einen an drei Seiten ausgeformten Steg 24 aufweist. An der vierten Seite des Bodenteils 21 ist ein Steg 24a geringerer Höhe ausgeformt, der an seiner nach außen weisenden Seite eine T-förmige Schiene 25 trägt. Ferner ist an dem Bodenteil 21 in einer geringen Entfernung zu den Stegen 24 bzw. dem Steg 24a eine umlaufende Rippe 26 ausgeformt, welche einer Lichtverschneidung angehört und etwa den filmaufnehmenden Raum umgrenzt. Gegenüber der Seite mit dem Steg 24a ist zwischen dem Steg 24 und der Rippe 26 ein Verschlußriegel 27 vorgesehen, der mit einem Haken 28 eines Deckelteils 29 zusammenwirkt.

Der Deckelteil 29 ist im wesentlichen in einer Sandwich-Anordnung ausgeführt und weist eine flexible Kassettenwand 20 auf, an welcher an der Scharnierseite ebenfalls ein eine T-förmige Schiene 31 tragender Steg 32 ausgeformt ist, welche über ein flexibles Formteil 18 mit der Schiene 25 verbunden ist. An der Innenseite der Kassettenwand 20 sind diagonal verlaufende Stege 33 sowie zwei im Randbereich umlaufende Rippen 34 und 35 ausgeformt. Die Rippen 34 und 35 gehören ebenfalls zur Lichtverschneidung und sind dabei so angeordnet, daß sie die Rippe 26 des Bodenteils umgreifen. Die Stege 33 und inneren Rippen 35 an der Kassettenwand 20 haben gleiche Höhe und tragen eine dünne Kunststoffplatte 36. Die Kunststoffplatte 36 ist zweckmäßigerweise durch Ultra-Schall-Schweißen an den Stegen bzw. Rippen angebracht. Mit dieser Sandwich-Anordnung der Kunststoffwand 20 und der Kunststoffplatte 36 werden einerseits geringe Dicken und damit ein geringes Kassettengewicht erreicht, andererseits dem Deckel 29 eine höhere Steifigkeit verliehen.

An der nach innen gerichteten Seite der Kunststoffplatte 36 ist die Magnetplatte 8 befestigt, an welcher die Verstärkungsfolie 9 angebracht ist.

An der Wand 22 des Bodenteils 21 ist eine schmale röntgendurchlässige, elastische Leiste 19, vorzugsweise aus Schaumstoff, vorgesehen, welche an der Wand 22 entlang den Rippen 26 und innerhalb des durch die Rippen 26 gebildeten Rechtecks befestigt ist. Auf der elastischen Leiste 19 ist als Gegenplatte eine dünne Folie 10′ aus einem ferromagnetischen Werkstoff befestigt, auf welcher die zweite Verstärkungsfolie 9 angebracht ist.

Die Kassettenwände 22 und 20 weisen im Ruhezustand, also im geöffneten Zustand der Kassette, eine leichte zylindrische Vorbiegung auf, wobei die konvexen Seiten dieser Biegung einander zugekehrt sind. Während die Kunststoffplatte 36, Magnetplatte 8 und die Verstärkungsfolie 9 in dem geöffneten Zustand sich dieser Biegung anpassen, bleiben die Gegenplatte 10′ und die andere Verstärkungsfolie 9 durch die schwimmende Aufhängung auf der Leiste 19 in einer nahezu ebenen Lage. Zur Versteifung der verhältnismäßig dünnen Kassettenwand 22 des Bodenteils 21 kann diese Wand ferner noch eine sphärische, zum Kassettendeckel 29 gerichtete Vorbiegung aufweisen.

Aufgrund der zylindrischen Vorbiegung der Wände 22 und 20 kann die Kassette in automatischen Ent- und Beladeeinrichtungen auf einfache Weise gehandhabt werden. Außerdem ist es bei dem magnetischen Andruck zwischen Magnetplatte und Gegenplatte von großem Vorteil, wenn beim Öffnen der Kassette die beiden Wände nicht im wesentlichen senkrecht zueinander auseinandergezogen werden, sondern sich die beiden Wände gemäß der zylindrischen Vorbiegung voneinander abschälen. Aufgrund der rauhen Oberflächen der Verstärkungsfolien 9 kann sich ein Film leicht von der Folie lösen und aus der Kassette entnommen werden.

Die Gegenplatte 10′ kann ferner mit einer dünnen Polyester- oder Polyäthylenfolie laminiert werden, welche eine Stärke von etwa 0,05 mm aufweist. Damit ist der Gegenplatte 10′ auch ein Korrosionsschutz gegeben. Außerdem wird sie durch diese Laminierung geringfügig versteift, wodurch ihre Knittergefahr sehr verringert ist. Die Röntgenabsorption wird durch diese Folie nicht spürbar erhöht.

**Ansprüche**

1. Verstärkungsfolie mit einer dem Film zugewandten rauhen Oberfläche in einer Röntgenfilmkassette mit einem Bodenteil, einem Deckelteil, Verbindungselementen zum Verschließen der beiden Kassettenteile, einer zur Filmgröße etwa gleich großen Magnetplatte und einer auf die Magnetkraft der Magnetplatte ansprechenden Gegenplatte, wobei Film und Verstärkungsfolie zwischen Magnetplatte und Gegenplatte gehalten sind und Magnetplatte und/oder Gegenplatte elastisch an ihrem Kassettenteil angebracht sind, dadurch gekennzeichnet, daß der Rauhheitsgrad der Oberfläche 25 bis 50 µm beträgt, wobei die die Rauhigkeit bewirkenden Erhöhungen bzw. die in die Oberfläche eingelassenen Teilchen in einer Anzahl von 800 bis 1 200 pro $cm^2$ vorhanden sind.

2. Verstärkungsfolie nach Anspruch 1, dadurch gekennzeichnet, daß die Oberfläche durch formgebende Maßnahmen, vorzugsweise durch Prägen mittels einer heißen Prägewalze oder Rakeln gebildet ist.

3. Verstärkungsfolie nach Anspruch 1, dadurch gekennzeichnet, daß zur Bildung der rauhen Oberfläche in die Leuchtschicht der Folie (9) Teilchen in Form von Körnchen oder Kügelchen (12) eingebracht sind, welche über die Oberfläche der an sich glatten Verstärkungsfolie hinausragen.

4. Verstärkungsfolie nach Anspruch 2, dadurch gekennzeichnet, daß die Teilchen, Körnchen, Kügelchen (12) lichtdurchlässig sind.

## Claims

1. A reinforcement foil with a rough surface facing the film in an X-ray film cartridge with a base part, a cover part, connection elements for closing both cartridge parts, a magnetic plate, which is approximately the same size as the film and a counter plate responding to the magnetic force of the magnetic plate, the film and the reinforcement foil being held between the magnetic plate and the counter plate and the magnetic plate and/or the counter plate being resiliently attached to their part of the cartridge, characterised in that the degree of roughness of the surface is 25 to 50 μm, the raised portions effecting the roughness or the particles introduced into the surface being in a quantity of 800 to 1 200 per cm².

2. A reinforcement foil according to Claim 1, characterised in that the surface is formed by shaping procedures, preferably by stamping by means of a hot impressing roller or spreader means.

3. A reinforcement foil according to Claim 1 characterised in that in order to form the rough surface, particles in the form of granules or globules (12) are introduced into the phosphorescent layer of the foil (9), and protrude over the surface of the reinforcement foil, which is smooth *per se*.

4. A reinforcement foil according to Claim 2, characterised in that the particles, granules and globules (12) are transparent.

## Revendications

1. Feuille intensificatrice ayant une surface rugueuse tournée vers le film dans une cassette pour films radiographiques comprenant une partie formant fond, une partie formant couvercle, des éléments de liaison pour fermer les deux parties de la cassette, une plaque magnétique ayant à peu près la même dimension que le film et une plaque antagoniste réagissant à la force magnétique de la plaque magnétique, le film et la feuille intensificatrice étant maintenus entre la plaque magnétique et antagoniste et la plaque magnétique et/ou la plaque antagoniste étant fixées élastiquement à leur partie de cassette, caractérisée en ce que le degré de rugosité de la surface est compris entre 25 et 30 microns, les sommets donnant de la rugosité ou les particules introduites dans la surface étant présents à raison de 800 à 1 200 par cm².

2. Feuille intensificatrice suivant la revendication 1, caractérisé en ce que la surface est formée par façonnage, de préférence par gaufrage, au moyen d'un rouleau chaud destiné à donner des empreintes, ou d'une raclette.

3. Feuille intensificatrice suivant la revendication 1, caractérisée en ce que, pour former la surface rugueuse dans la couche luminescente de la feuille (9) sont introduites des particules sous forme de petits grains ou de petites billes (12) qui font saillie sur la surface de la feuille intensificatrice en elle-même lisse.

4. Feuille intensificatrice suivant la revendication 2, caractérisée en ce que les particules, les petits grains et les petites sphères (12) sont transparents.

*Fig.1*

Fig.2

Fig. 3

Fig. 4